Europäisches Patentamt

(19) European Patent Office

Office européen des brevets

(11) Veröffentlichungsnummer : **0 332 810 B1**

## EUROPÄISCHE PATENTSCHRIFT

(45) Veröffentlichungstag der Patentschrift :
21.11.91 Patentblatt 91/47

(51) Int. Cl.⁵ : **B60J 7/12**

(21) Anmeldenummer : 89100914.4

(22) Anmeldetag : 20.01.89

(54) Versenkbares Faltverdeck eines Kraftfahrzeugs.

(30) Priorität : 17.03.88 DE 3808909

(43) Veröffentlichungstag der Anmeldung :
20.09.89 Patentblatt 89/38

(45) Bekanntmachung des Hinweises auf die
Patenterteilung :
21.11.91 Patentblatt 91/47

(84) Benannte Vertragsstaaten :
DE ES FR GB IT

(56) Entgegenhaltungen :
EP-A- 0 246 201
DE-A- 3 416 330
US-A- 4 784 428

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Ball, Wilfried
Breslauer Strasse 24
W-8322 Dingolfing (DE)**
Erfinder : **König, Johann
Bulachstrasse 33
W-8066 Günding (DE)**

EP 0 332 810 B1

## Beschreibung

Die Erfindung betrifft ein versenkbares Faltverdeck eines Kraftfahrzeugs, mit den im Oberbegriff des Hauptanspruchs angegebenen Merkmalen.

Ein derartiges Faltverdeck ist bereits aus der DE-A-3416330 bekannt, das eine mit dem Faltverdeck fest verbundene Heckscheibe aus Glas aufweist, die gekrümmt ausgebildet bis in die Seitenbereiche des Faltverdecks verlaufen kann. Die Heckscheibe ist an beiden Seiten jeweils etwa im mittleren Bereich von einer mit dem Verdeckgestänge gelenkig verbundenen Stützstrebe gestützt, die das Faltverdeck in Schließstellung nach außen belastet und dadurch spannt. Beim Einbringen des Faltverdecks in ein hinteres Aufnahmefach wird die Heckscheibe über die Stützstreben zwangsweise in das Aufnahmefach eingeschwenkt. Besonders nachteilig ist, daß die Heckscheibe nicht ausreichend festgehalten ist. Beim Überfahren von Bodenunebenheiten kann die Heckscheibe Kippbewegungen um die Anlenkstellen der Stützstreben ausführen, die Geräusche und zumindest nach einiger Zeit ein Nachlassen der Spannung des Faltverdecks bewirken. Durch die an den mittleren Seitenbereichen der Heckscheibe vorgesehenen Stützstreben werden beim Spannen des Faltverdecks große Biegemomente auf die Heckscheibe ausgeübt, die dadurch leicht brechen kann. Bei Fertigungsungenauigkeiten der Heckscheibe und/oder des Faltverdecks wird die mit dem Faltverdeck fest verbundene Heckscheibe ungleich belastet.

Aus der EP-A-0246201 ist ein Faltverdeck mit einer Heckscheibe aus Glas bekannt, die an dem Steg eines U-förmigen Spannbügels um eine Querachse schwenkbar befestigt ist. Mehrere jeweils von einem vorderen Querspriegel zum oberen Rand der Heckscheibe verlaufende Gurte schwenken die Heckscheibe beim Schließen des Faltverdecks vor die Hecköffnung. Bei Nichtgebrauch wird das Faltverdeck in ein hinteres Aufnahmefach eingebracht, in das die Heckscheibe bei entspannten Gurten einschwenkt. Besonders nachteilig ist, daß die Heckscheibe in ihrer Schließstellung von den Gurten nicht ausreichend festgehalten ist. Beim Überfahren von Bodenunebenheiten kann die Heckscheibe vertikale Bewegungen ausführen, die nach einiger Zeit eine Dehnung der Gurte bewirken. Bei gedehnten Gurten liegt jedoch die Heckscheibe nicht dicht an dem inneren Rand der Heckscheibe an, so daß Feuchtigkeit in das Fahrzeuginnere eindringen kann. Die Heckscheibe ist auch im Aufnahmefach nicht ausreichend festgehalten, da sie nach dem Einschwenken lediglich mit einem Randbereich am Boden des Aufnahmefaches unter ihrer Schwerkraft anliegt und beim Überfahren von Bodenunebenheiten hochgeschleudert und beim nachfolgenden Aufprall am Boden des Aufnahmefaches zerstört oder beschädigt werden kann.

Der Erfindung liegt die Aufgabe zugrunde, ein versenkbares Faltverdeck nach dem Oberbegriff des Hauptanspruchs anzugeben, bei dem auch eine große, bis in die Seitenbereiche gekrümmte Heckscheibe aus Glas nur gering und gleichmäßig belastet und in Schließstellung des Faltverdecks sowie während der Aufbewahrung im Aufnahmefach ausreichend festgehalten ist. Darüber hinaus soll das Faltverdeck auch einen Himmel mit einer thermischen Isolierung aufweisen können.

Diese Aufgabe ist durch die im Kennzeichen des Hauptanspruchs angegebenen Merkmale gelöst. Besonders vorteilhaft ist, daß die Heckscheibe über einen einfachen, durch seitliche Viergelenke und eine Steuerstange gebildeten Mechanismus zwangsweise beim Öffnen des Faltverdecks vollständig in das Aufnahmefach und beim Schließen des Faltverdecks vor die Hecköffnung im Faltverdeck verlagert wird. Auf diese vorteilhafte Weise ist die Heckscheibe in jeder Lage des Faltverdecks festgehalten. Um ein in Schließstellung dichtes Anliegen der Heckscheibe an dem inneren Randbereich der Hecköffnung zu erreichen, ist lediglich eine geringe Anpreßkraft erforderlich. Durch die seitliche Abstützung der Heckscheibe über jeweils zwei mit Abstand hintereinander angeordnete Stützglieder wird diese nur gering belastet. Die Heckscheibe kann beispielsweise aus Glas gekrümmt gefertigt und mit Heizdrähten versehen sein. Das Faltverdeck kann auch einen Himmel beispielsweise mit thermischer Isolierung aufweisen, so daß ein mit einem derartigen Faltverdeck versehenes Fahrzeug in der Schall- und Wärmeisolierung und in der Sicht nach rückwärts etwa einem Fahrzeug mit feststehendem Dach entspricht.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen :

Figur 1     einen vertikalen Längsschnitt durch die Heckscheibe des Faltverdecks,

Figur 2     eine Figur 1 entsprechende Ansicht bei hochgeschwenktem Spannbügel,

Figur 3     eine Figur 1 entsprechende Ansicht nach dem Einbringen des Faltverdecks in das Aufnahmefach,

Figuren

4 bis 6     unterschiedliche Scheibendichtungen der in ihrem hinteren unteren Randbereich in einem Längsschnitt dargestellten Heckscheibe.

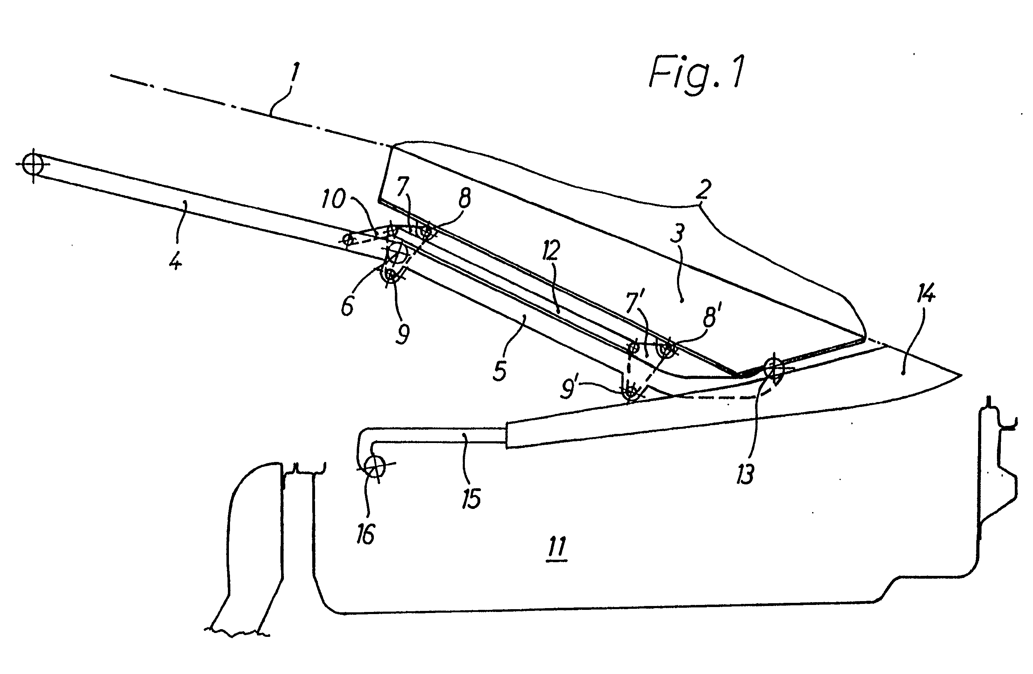

Das in Figur 1 durch eine strichpunktierte Linie dargestellte Faltverdeck 1 eines Kraftfahrzeugs weist eine Hecköffnung 2 auf, der eine verstellbare Heckscheibe 3 zugeordnet ist. Aufgrund der zur Längsachse des Kraftfahrzeugs symmetrischen Ausbildung des Faltverdecks werden die zu seitlich angeordneten Bauteilen gegenüberliegenden Teile nur in Ausnahmefällen angegeben. In der dargestellten Schließstellung des Faltverdecks 1 liegt die Heckscheibe 3 von innen an dem Randbereich der Hecköffnung 2 an. Ein das Faltverdeck 1 stützendes Verdeckgestänge weist an beiden Seiten der Heckscheibe 3 je eine vordere Spannstange 4 und eine hintere Spannstange 5 auf, die in einem Gelenk 6 um eine quer verlaufende Achse schwenkbar verbunden sind. Jeweils die vordere und hintere Spannstange 4, 5 bilden einen Übertotpunktmechanismus, der in der dargestellten Schließstellung des Faltverdecks an der Heckscheibe 3 eine nach außen gerichtete Spannkraft bewirkt. Die Spannkraft kann so ausgelegt werden, daß die Heckscheibe 3 in Schließstellung des Faltverdecks stets feuchtigkeitsdicht an dem inneren Randbereich der Hecköffnung 2 anliegt, ohne die Heckscheibe 3 wesentlich zu belasten. An beiden Seiten der Heckscheibe 3 sind jeweils zwei als Dreieckslenker ausgebildete Stützglieder 7, 7' um je eine Querachse 8, 8' schwenkbar an der Heckscheibe 3 befestigt. Die im Ausführungsbeispiel parallelen Stützglieder 7, 7' sind jeweils an ihrem freien Ende um eine zu den Querachsen 8, 8' parallele Achse 9, 9' schwenkbar an der hinteren Spannstange 5 angelenkt. Die Heckscheibe 3 ist demnach an ihren Seiten durch Stützglieder 7, 7', die Viergelenke bilden, an den seitlich gegenüberliegenden hinteren Spannstangen 5 abgestützt. Jeweils eine seitlich angeordnete Steuerstange 10 ist einerseits mit dem Stützglied 7 und andererseits mit der vorderen Spannstange 4 gelenkig verbunden, so daß die Heckscheibe 3 in jeder Lage des Faltverdecks 1 festgehalten ist. Die jeweils seitlich gegenüberliegenden vorderen und hinteren Spannstangen 4, 5, die Stützglieder 7, 7', sowie die Steuerstangen 10 weisen einen zur Breite der Heckscheibe größeren seitlichen Abstand auf. Über die Viergelenke und die Steuerstangen 10 wird die Heckscheibe 3 zwangsweise beim Öffnen und Schließen des Faltverdecks 1 entweder vor die Hecköffnung 2 oder zusammen mit dem Faltverdeck 1 und seinem Verdeckgestänge in ein hinteres Aufnahmefach 11 vollständig eingebracht. Die Querachsen 8, 8' sind bei dem Ausführungsbeispiel an der rahmenlosen Heckscheibe 3 ausgebildet. Ebenso könnten die Querachsen 8, 8' an einem Rahmen der Heckscheibe 3 ausgebildet sein. In diesem Fall kann eine Verbindungsstange 12 entfallen, die im Ausführungsbeispiel gelenkig an den Stützgliedern 7, 7' befestigt ist und diese verbindet. Durch die Verbindungsstange 12 werden Spannungen im Randbereich der Heckscheibe 3 beim Verstellen der Viergelenke vermieden. Das jeweils hintere Ende der hinteren Spannstange 5 ist um eine im Stegbereich eines U-förmigen Spannbügels 14 in Querrichtung verlaufende Schwenkachse 13 schwenkbar an dem Spannbügel 14 befestigt. Das Faltverdeck 1 ist mit seinem hinteren unteren Bereich an dem Spannbügel 14 befestigt, der in Schließstellung des Faltverdecks 1 von einer nicht dargestellten Arretierungseinrichtung feststellbar ist und ein Spannen des Faltverdecks 1 bewirkt. Der Spannbügel 14 ist in den Endbereichen seiner in Schließstellung des Faltverdecks 1 nach vorne gerichteten Schenkel um eine in Querrichtung verlaufende karosseriefeste Achse 16 nach oben schwenkbar.

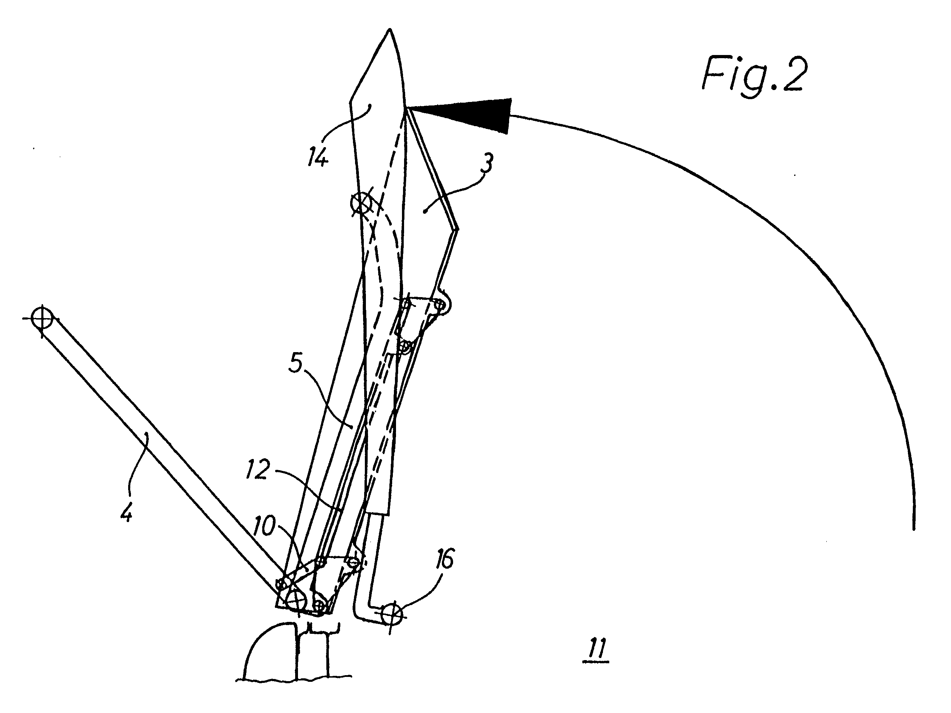

In Figur 2 ist der Spannbügel 14 in Pfeilrichtung hochgeschwenkt dargestellt, wobei die Heckscheibe 3 die vordere 4 und hintere Spannstange 5, die Steuerstange 10 und die Verbindungsstange 12 entsprechend mitverlagert werden. Ein Hochschwenken des Spannbügels 14 ist bei dem Ausführungsbeispiel vor dem Einbringen des Faltverdecks in das Aufnahmefach erforderlich, damit ein die obere Öffnung des Aufnahmefaches 11 verschließender, nicht dargestellter Deckel um eine hintere Querachse hochschwenkbar ist.

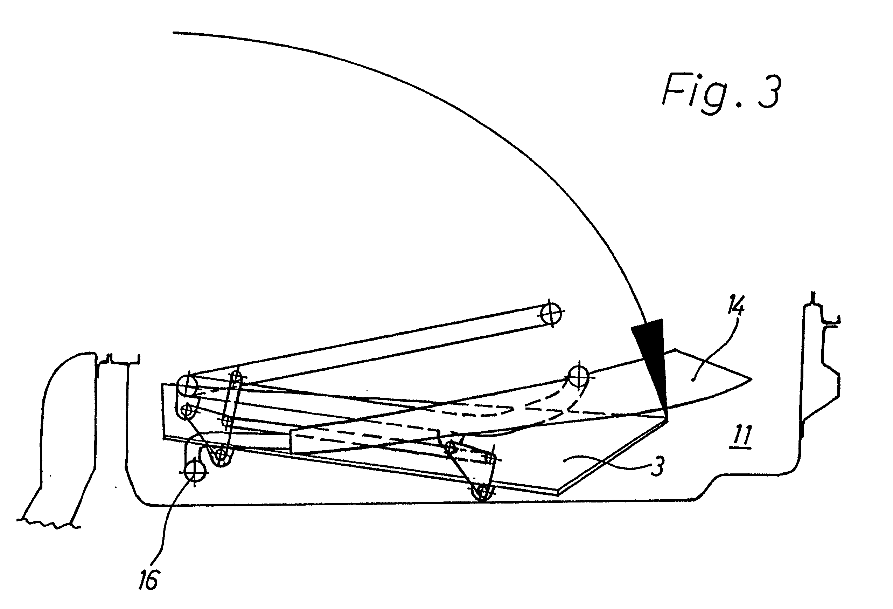

Gemäß Figur 3 kann nach dem Hochschwenken des Spannbügels 14 und des nicht dargestellten Deckels die Heckscheibe 3, der Spannbügel 14 und das Faltverdeck mit seinem Verdeckgestänge in Pfeilrichtung vollständig in das Aufnahmefach eingebracht werden. Wie in der Figur dargestellt wird dabei die karosseriefeste Achse 16 nach unten in das Aufnahmefach 11 verlagert. Hierzu ist die Achse 16 an einem nicht dargestellten höhenverstellbaren Stellglied ausgebildet. Wird das Faltverdeck geschlossen, so verlagert sich das Stellglied nach oben, so daß die Achse 16 in die hochgestellte, in den Figuren 1 und 2 abgebildete Lage gelangt. Ein Höhenverlagerung des Stellgliedes kann beispielsweise über einen Hydraulik-oder Pneumatikzylinder erfolgen. Bei dem Ausführungsbeispiel ist die Heckscheibe aus Glas bis in die Seitenbereiche gewölbt gefertigt und mit Heizdrähten versehen. Das Faltverdeck weist einen nicht dargestellten Himmel mit einer thermischen Isolierung auf, die in Figur 3 mit dem Himmel in das Aufnahmefach eingebracht ist. Nach dem Einbringen des gesamten Faltverdecks in das Aufnahmefach wird dieses von dem nicht dargestellten Deckel verschlossen. Das Faltverdeck kann nun unauffällig und geschützt im Fahrzeug mitgeführt und bei Bedarf dem Aufnahmefach entnommen werden.

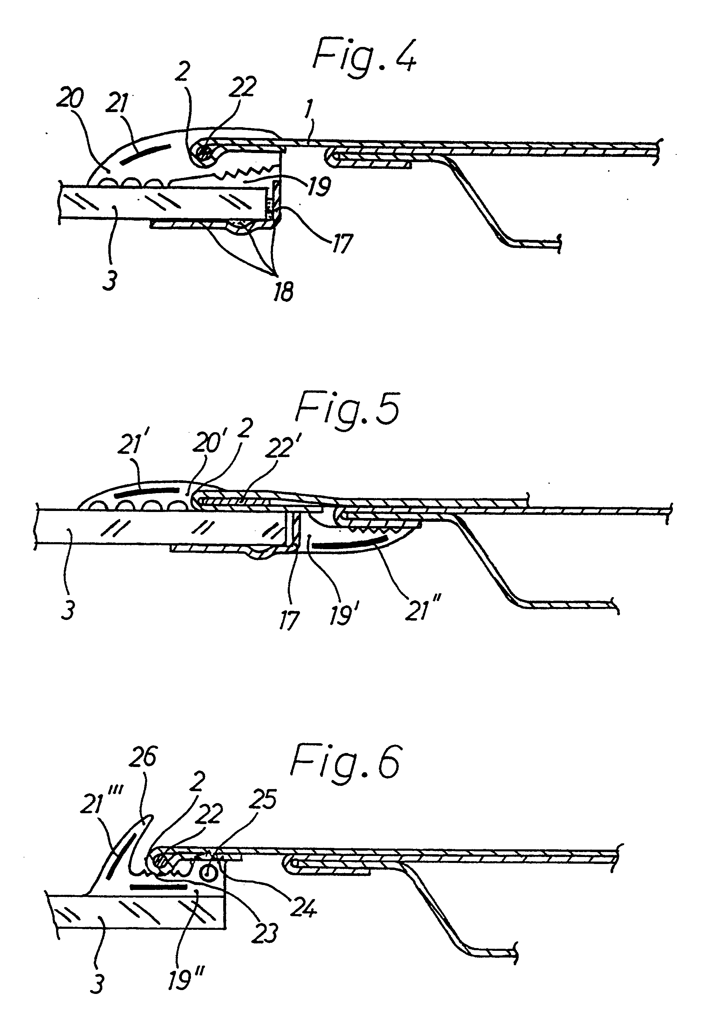

Der hintere untere Bereich der in Schließstellung befindlichen Heckscheibe 3 ist in Figur 4 in einem Längsschnitt dargestellt. Anders als bei dem Ausführungsbeispiel kann die Heckscheibe 3 wie in Figur 4 einen Rahmen 17 aufweisen, der beispielsweise durch einen Klebstoff 18 mit der Heckscheibe 3 verbunden ist. Auf den Randbereich der Heckscheibe 3 ist eine elastische, umlaufende Scheibendichtung 19 aufvulkanisiert. Am Rand der Hecköffnung 2 ist eine elastische Außendichtung 20 befestigt, die in der dargestellten Schließstellung des Faltverdecks 1 von außen an der Heckscheibe 3 anlegt. Die Außendichtung 20 wirkt bei dem Ausführungsbeispiel mit der Scheibendichtung 19 zusammen. Es ist auch möglich, daß lediglich eine Scheibendichtung oder

3

Außendichtung vorgesehen ist, die in Schließstellung des Faltverdecks mit der Heckscheibe bzw. dem Randbereich der Hecköffnung die Hecköffnung feuchtigkeitsundurchlässig abdichtet. An den Dichtflächen der Außendichtung 20 und der Scheibendichtung 19 sind zahnartige Dichtlippen ausgebildet. In die Außendichtung 20 ist zur Versteifung eine streifenförmige Metalleinlage 21 eingebracht. Der Rand der Hecköffnung 2 bildet eine Schlaufe, in die eine stabförmige Metallverstärkung 22 eingelegt ist.

In Figur 5 ist eine alternative Dichtungsanordnung dargestellt. Im Unterschied zu Figur 4 ist die Scheibendichtung 19' nicht an der Heckscheibe 3 sondern an dem Rahmen 17 der Heckscheibe 3 anvulkanisiert. Die Scheibendichtung 19' wirkt nicht mit der Außendichtung 20' sondern mit den inneren Randbereich der Hecköffnung 2 zusammen. In die Scheibendichtung 19' und in die Außendichtung 20' ist jeweils eine Metalleinlage 21', 21" eingebracht. Der Rand der Hecköffnung 2 bildet eine Schlaufe, in die eine umlaufend streifenförmige Metallverstärkung 22' eingelegt ist.

Die in Figur 6 dargestellte Dichtungsanordnung entspricht dem Ausführungsbeispiel. Auf dem Randbereich der rahmenlosen Heckscheibe 3 aus Glas ist eine Scheibendichtung 19" aufvulkanisiert, die einen ersten Bereich 23 und einen äußeren, im Querschnitt etwa halbkreisförmig erhöhten zweiten Bereich aufweist. Der Rand der Hecköffnung 2 bildet eine Schlaufe, in die eine umlaufend zylindrische Metallverstärkung 22 eingelegt ist. In Schließstellung des Faltverdecks liegt der durch die Metallverstärkung 22 verdickte Randbereich der Hecköffnung 2 an dem ersten Bereich 23 an, während der an den verdickten Randbereich der Hecköffnung 2 angrenzende Bereich mit dem zweiten Bereich der Scheibendichtung 19" zusammenwirkt. Die beiden Bereiche 23, 24 der Scheibendichtung 19" sind an der Oberfläche mit zahnartigen Dichtlippen versehen, die zum benachbarten Rand der Heckscheibe 3 parallel verlaufen. Der erhöhte Bereich 24 der Scheibendichtung 19" schließt einen Hohlraum 25 ein. Von dem inneren Bereich der Scheibendichtung 19" steht ein Wasserableitwulst 26 nach außen ab, der im Ausführungsbeispiel zum äußeren Rand der Heckscheibe 3 geneigt ist. Ebenso könnte der Wasserableitwulst auch zur Heckscheibenmitte geneigt sein. Zur Versteifung ist in den Wasserableitwulst 26 eine Metalleinlage 21"' eingebettet.

Neben den in den Figuren 4 bis 6 abgebildeten Scheibenabdichtungen sind auch durch Kombinationen einzelner Elemente dieser Scheibenabdichtungen gebildete Dichtungsanordnungen möglich.

## Patentansprüche

1. Versenkbares Faltverdeck eines Kraftfahrzeugs, das an einer Hecköffnung (2) eine Heckscheibe (3) aufweist, an der an beiden Seiten je ein Stützglied (7, 7') um eine Querachse (8, 8') schwenkbar befestigt ist, das an seinem freien Ende (9, 9') an einem Stützelement (5) eines das Faltverdeck stützenden Verdeckgestänges gelenkig befestigt ist, wobei sich beim Einbringen des Faltverdecks in ein hinteres Aufnahmefach (11) die Heckscheibe (3) von den Stützgliedern (7, 7') zwangsgesteuert in das Aufnahmefach (11) verlagert, **dadurch gekennzeichnet,** daß an beiden Seiten der Heckscheibe (3) jeweils zwei Stützglieder (7, 7') hintereinander schwenkbar angeordnet sind, die ein Viergelenk bilden, das über eine mit einem Element (Spannstange 4) des Verdeckgestänges gelenkig verbundene Steuerstange (10) verstellbar ist und beim Schließen des Faltverdecks (1) eine Verlagerung der Heckscheibe (3) bis zum Anliegen an dem inneren Randbereich der Hecköffnung (2) bewirkt.

2. Versenkbares Faltverdeck nach Anspruch 1, dadurch gekennzeichnet, daß beide auf einer Seite der Heckscheibe (3) angeordneten Stützglieder (7, 7') an dem Stützelement (Spannstange 5) schwenkbar befestigt sind.

3. Versenkbares Faltverdeck nach Anspruch 1, dadurch gekennzeichnet, daß die Querachsen (8, 8') und Achsen (9, 9') des Viergelenks parallel verlaufen.

4. Versenkbares Faltverdeck nach Anspruch 1, dadurch gekennzeichnet, daß das Stützelement eine in Schließstellung des Faltverdecks (1) hintere Spannstange (5) und das Element eine vordere Spannstange (4) des Verdeckgestänges ist, die gelenkig verbunden einen Übertotpunktmechanismus bilden, der das Faltverdeck (1) in Schließstellung nach außen belastet.

5. Versenkbares Faltverdeck nach Anspruch 1, dadurch gekennzeichnet, daß die Steuerstange (10) um jeweils eine zur Querachse (8, 8') parallele Achse einerseits an dem Element (Spannstange 4) und andererseits an der Heckscheibe oder an einem Stützglied (7) gelenkig befestigt ist.

6. Versenkbares Faltverdeck nach Anspruch 1, dadurch gekennzeichnet, daß die beiden auf einer Seite angeordneten Stützglieder (7, 7') über eine Verbindungsstange (12) verbunden sind, die an den Stützgliedern (7, 7') gelenkig befestigt ist.

7. Versenkbares Faltverdeck nach Anspruch 1, dadurch gekennzeichnet, daß die Stützglieder (7, 7') parallel angeordnet sind.

8. Versenkbares Faltverdeck nach Anspruch 4, dadurch gekennzeichnet, daß jeweils das hintere Ende der hinteren Spannstange (5) um eine im hinteren Bereich eines U-förmigen Spannbügels (14) in Querrichtung verlaufende Schwenkachse (13) schwenkbar an dem Spannbügel (14) befestigt ist, der mit dem hinteren unteren Bereich des Faltverdecks (1) verbunden und in den Endbereichen seiner in Schließstellung nach vorne gerichteten Schenkel (15) um eine karosseriefeste, in Querrichtung verlaufende Achse (16) nach oben schwenkbar ist.

9. Versenkbares Faltverdeck nach Anspruch 8, dadurch gekennzeichnet, daß die karosseriefeste Achse (16) des Spannbügels (14) an einem im Aufnahmefach (11) höhenverstellbaren Stellglied ausgebildet ist, das die Achse (16) beim Schließen des Faltverdecks (1) hochstellt und beim Öffnen des Faltverdecks (1) nach unten in das Aufnahmefach (11) verlagert.

10. Versenkbares Faltverdeck nach Anspruch 1, mit einer Heckscheibe aus Glas, dadurch gekennzeichnet, daß der dem Randbereich der Hecköffnung (2) gegenüberliegende Randbereich der Heckscheibe (3) mit einer elastischen, umlaufenden Scheibendichtung (19, 19', 19'') verbunden ist.

11. Versenkbares Faltverdeck nach Anspruch 10, dadurch gekennzeichnet, daß die Scheibendichtung (19, 19', 19'') an der Heckscheibe (3) oder an einem Rahmen (17) der Heckscheibe (3) anvulkanisiert ist.

12. Versenkbares Faltverdeck nach Anspruch 10, dadurch gekennzeichnet, daß an dem Rand der Hecköffnung (2) eine elastische Außendichtung (20, 20') befestigt ist, die in Schließstellung des Faltverdecks (1) von außen an der Heckscheibe (3) und/oder der Scheibendichtung (19) anliegt.

13. Versenkbares Faltverdeck nach Anspruch 10 oder 12, dadurch gekennzeichnet, daß die Scheibendichtung (19, 19', 19'') und/oder die Außendichtung (20, 20') Hohlräume (25) und/oder Metalleinlagen (21, 21', 21'', 21''') einschließt.

14. Versenkbares Faltverdeck nach Anspruch 10 oder 12, dadurch gekennzeichnet, daß die Scheibendichtung (19'') oder die Außendichtung einen nach außen abstehenden Wasserableitwulst (26) aufweist.

15. Versenkbares Faltverdeck nach Anspruch 1, dadurch gekennzeichnet, daß der Rand der Hecköffnung (2) eine Schlaufe bildet, in die eine Metallverstärkung (22, 22') eingelegt ist.

## Claims

1. A fold-away hood of a motor vehicle, comprising on a rear opening (2) a rear pane (3) to each of the two sides of which a support member (7, 7') is secured pivotably about a transverse spindle (8, 8'), which member is articulatedly secured at its free end (9, 9') to a support element (5) of a hood linkage supporting the folding hood, where in the introduction of the folding hood into a rear reception compartment (11) the rear pane (3) is shifted under positive control by the support members (7, 7') into the reception compartment (11), characterised in that two support members (7, 7') are arranged pivotably one behind the other on each of the two sides of the rear pane (3), which members form a quadrilateral linkage which is displaceable by means of a control rod (10) articulatedly connected with an element (tie rod 4) of the hood linkage, and in the closing of the folding hood (1) effects a displacement of the rear pane (3) until it rests on the inner marginal region of the rear opening (2).

2. A fold-away hood according to Claim 1, characterised in that both support members (7, 7') arranged on one side of the rear pane (3) are pivotably secured to the support element (tie rod 5).

3. A fold-away hood according to Claim 1, characterised in that the transverse spindles (8, 8') and spindles (9, 9') of the quadrilateral linkage extend parallel to each other.

4. A fold-away hood according to Claim 1, characterised in that the support element is a rear tie rod (5) when in the closed position of the folding hood (1) and the element is a forward tie rod (4) of the hood linkage, which when articulatedly connected form a beyond-dead-point mechanism which loads the folding hood (1) outwards when in the closed position.

5. A fold-away hood according to Claim 1, characterised in that the control rod (10) is secured articulatedly about a spindle in each case parallel to the transverse spindle (8, 8') for the one part on the element (tie rod 4) and for the other part on the rear pane or on a support member (7).

6. A fold-away hood according to Claim 1, characterised in that the two support members (7, 7') arranged on one side are connected through a connecting rod (12) which is articulatedly secured to the support members (7, 7').

7. A fold-away hood according to Claim 1, characterised in that the support members (7, 7') are parallel to each other.

8. A fold-away hood according to Claim 4, characterised in that, in each case, the rear end of the rear tie rod (5) is secured pivotably about a pivot spindle (13) extending in the transverse direction in the region of a U-shaped support arch piece (14) to the arch piece (14) which is connected with the lower rear region of the folding hood (1) and is upwardly pivotable in the end regions of its legs (15), which are directed forwards in the closed position, about a spindle (16) fast with the car body and extending in the transverse direction.

9. A fold-away hood according to Claim 8, characterised in that the spindle (16), fast with the body, of the support arch piece (14) is formed on a setting member adjustable in height in the reception compartment (11), which setting member sets up the spindle (16) in the closing of the fold-away hood (1) and shifts the spindle downwards into the reception compartment (11) in the opening of the fold-away hood (1).

10. A fold-away hood according to Claim 1 having a rear pane of glass, characterised in that the marginal region of the rear pane (3) lying opposite to the marginal region of the rear opening (2) is connected with an elastic, surrounding, window seal (19, 19', 19").

11. A fold-away hood according to Claim 10, characterised in that the window seal (19, 19', 19") is vulcanised to the rear pane (3) or to a frame (17) of the rear pane (3).

12. A fold-away hood according to Claim 10, characterised in that, on the margin of the rear opening (2), an elastic outer seal (20, 20') is secured which, when the fold-away hood (1) is in the closed position, lies from the exterior against the rear pane (3) and/or the window seal (19).

13. A fold-away hood according to Claim 10 or 12, characterised in that the window seal (19, 19', 19") and/or the outer seal (20, 20') encloses cavities (25) and/or metal inserts (21, 21', 21", 21'").

14. A fold-away hood according to Claim 10 or 12, characterised in that the window seal (19") or the external seal comprises an outwardly- protruding water drain bead (26).

15. A fold-away hood according to Claim 1, characterised in that the margin of the rear opening (2) forms a loop into which a metal reinforcement (22, 22') is laid.

## Revendications

1. Capote repliable escamotable pour véhicule à moteur, qui présente une lunette arrière (3) sur une ouverture arrière (2), sur laquelle est fixé des deux côtés un organe de support (7, 7') pouvant pivoter autour d'un axe transversal (8, 8'), qui à son extrémité libre (9, 9') est fixe, de façon articulée, sur un élément de support (5) d'une timonerie supportant la capote repliable, dans laquelle la lunette arrière (3) est rangée, lors du repliage de la capote dans un compartiment arrière de réception (11), obligatoirement dans le compartiment de réception (11) par les organes de support (7, 7'), capote caractérisée en ce que de chaque côté de la lunette arrière (3) sont disposés deux organes de support (7, 7') pouvant pivoter l'un derrière l'autre, qui forment un quadrilatère articulé, qui est manoeuvrable au moyen d'une tige de commande (10) reliée de façon articulée à un élément (tige de tension 4) de la timonerie de la capote et lors de la fermeture de la capote repliable (1) provoque une manoeuvre de la lunette arrière (3) jusqu'à ce qu'elle repose sur le pourtour de l'ouverture arrière (2).

2. Capote repliable escamotable selon la revendication 1, caractérisée en ce que deux organes de support (7, 7') disposés sur un côté de la lunette arrière (3) sont fixés de façon à pouvoir pivoter sur l'élément de support (tige de tension 5).

3. Capote repliable escamotable selon la revendication 1, caractérisée en ce que les axes transversaux (8, 8') et les axes (9, 9') du quadrilatère articulé s'étendent parallèlement.

4. Capote repliable escamotable selon la revendication 1, caractérisée en ce que l'élément de support est une tige de tension (5) arrière quand la capote repliable (1) est en position fermée et l'élément est une tige de tension avant (4) de la timonerie de la capote, qui forment en étant reliés de façon articulée à un mécanisme à dépassement de point mort, qui charge vers l'extérieur la capote repliable (1) en position fermée.

5. Capote repliable escamotable selon la revendication 1, caractérisé en ce que la tige de commande (10) est fixée de façon articulée d'une part à l'élément (tige de tension 4), par un axe parallèle à l'axe transversal (8, 8') et d'autre part à la lunette arrière ou à un organe de support (7).

6. Capote repliable escamotable selon la revendication 1, caractérisée en ce que les deux organes de support (7, 7') disposés sur un côté sont reliés au moyen d'une tige de liaison (12) qui est fixée de façon articulée aux organes de support (7, 7').

7. Capote repliable escamotable selon la revendication 1, caractérisée en ce que les organes de support (7, 7') sont disposés parallèlement.

8. Capote repliable escamotable selon la revendication 4, caractérisée en ce que chacune des extrémités arrière de la tige de tension arrière (5) est fixée à un étrier de tension (14) de façon à pouvoir pivoter autour d'un axe de pivotement (13) s'étendant en direction transversale dans la zone arrière d'un étrier de tension (14) en forme d'U, qui est relié à la zone arrière inférieure de la capote repliable (1) et peut basculer vers le haut dans les zones terminales de ses jambes dirigées vers l'avant en position fermée autour d'un axe (16) solidaire de la carrosserie, s'étendant dans le sens transversal.

9. Capote repliable escamotable selon la revendication 8, caractérisée en ce que l'axe solidaire de la carrosserie (16) de l'étrier de tension (14) est constitué sur un organe de support pouvant être manoeuvré en hauteur dans le compartiment de réception (11), organe qui soulève l'axe (16) lors de la fermeture de la capote repliable (1) et qui range vers le bas dans le compartiment de réception (11) lors de l'ouverture de la capote repliable.

10. Capote repliable escamotable selon la revendication 1, avec une lunette arrière en verre caractérisée en ce que le pourtour de la lunette arrière (3) se faisant vis-à-vis au pourtour de l'ouverture arrière (2) est pourvu d'un joint d'étanchéité de lunette (19, 19', 19") élastique, périphérique.

11. Capote repliable escamotable selon la revendication 10, caractérisée en ce que le joint d'étanchéité (19, 19', 19") est vulcanisé sur la lunette arrière (3) ou sur le cadre (17) de la lunette arrière (3).

12. Capote repliable escamotable selon la revendication 10, caractérisée en ce que sur le bord de l'ouverture arrière (2) est fixé un joint d'étanchéité élastique (20, 20') qui repose, quand la capote repliable (1) est en position fermée, de l'extérieur sur la lunette arrière (3) et/ou le joint d'étanchéité de lunette (19).

13. Capote repliable escamotable selon les revendications 10 ou 12, caractérisée en ce que le joint d'étanchéité de lunette (19, 19', 19") et ou le joint d'étanchéité extérieur (20, 20') enferme des espaces creux (25) et/ou des inserts métalliques (21, 21', 21", 21"').

14. Capote repliable escamotable selon les revendications 10 ou 12, caractérisée en ce que le joint d'étanchéité de lunette (19") ou le joint extérieur présente un bourrelet d'écoulement d'eau (26) dirigé vers l'extérieur.

15. Capote repliable escamotable selon la revendication 1, caractérisée en ce que le bord de l'ouverture arrière (2) forme une boucle fermée dans laquelle est inséré un renfort métallique (22, 22').

Fig. 1

Fig.2

EP 0 332 810 B1

Fig. 3

EP 0 332 810 B1

## Fig. 4

## Fig. 5

## Fig. 6